# EUROPEAN PATENT APPLICATION

(11) **EP 1 394 381 A1**
(43) Date of publication of application: **03.03.2004**
(21) Application number: 03019754.5
(22) Date of filing: 29.08.2003
(51) Int. Cl.: F02B 61/02, F02B 67/00, F02B 75/20, B62M 7/02

(54) **Motorcycle**

(30) Priority: 30.08.2002 JP 2002252849
(71) Applicant: YAMAHA HATSUDOKI KABUSHIKI KAISHA, Iwata-shi Shizuoka-ken (JP)
(72) Inventor: Takashi, Bunai, Iwata-shi, Shizuoka-ken (JP); Tadashi, Fukuda, Iwata-shi, Shizuoka-ken (JP)
(74) Representative: Grünecker, Kinkeldey, Stockmair & Schwanhäusser Anwaltssozietät

(57) **Abstract**

The present invention refers to a motorcycle having an engine and a transmission arranged in a transmission case provided at a rear upper side of the engine, wherein a clutch and an input shaft of the transmission are mountable to and dismountable from the transmission case from opposite lateral sides of the transmission case:

## Description

This invention relates to a motorcycle, in particular to a motorcycle having an engine mounted downwardly of a pair of left and right tank rails of a body frame.

A conventional motorcycle of this kind has been disclosed in JPA Hei 10-77861. The motorcycle shown in this patent publication has an engine mounted downwardly of a pair of left and right tank rails of a body frame and configured such that the longitudinal length of the vehicle body is shortened. The reason for such an engine configuration is to improve stability by extending a rear arm positioned rearwardly of the engine, forwardly of the vehicle body, or to improve controllability by shortening the wheel base as a result of the rear arm and the rear wheel positioned forwardly of the vehicle body. In the foregoing engine, to shorten the longitudinal length of the vehicle body, input and output shafts of the transmission, provided rearwardly of a crankshaft and parallel to it, are arranged vertically.

The transmission adopts an arrangement in which rotation of the crankshaft transmitted to the input shaft through a clutch is changed in its speed by transmission gears on the input and output shafts and transmitted to the output shaft. The clutch is provided on the right side of the vehicle body at the shaft end of the input shaft and rotation of the crankshaft is transmitted through a large reduction gear provided at the inner end of the clutch and a small reduction gear of the crankshaft meshing with the large reduction gear. The small reduction gear is formed on the outside circumferential surface of a crank web to make the axial length of the crankshaft as short as possible. The transmission gears are provided corresponding in number to the transmission stages and a system is selected in which power is transmitted by a dog clutch. The dog clutch is operated through a shift fork associated with a shift mechanism.

A transmission case for housing the transmission is formed to be divided vertically into upper and lower cases. The upper case is formed integrally in the rear of a cylinder body of the engine and supports both ends of the input shaft and the shift mechanism. The input shaft is formed such that its shaft end on the right side of the vehicle body is protruded rightwardly from the upper case, and the clutch is provided at this shaft end. The lower case is formed integrally in the rear of a crankcase. On the mating portion of the lower and upper cases is supported the output shaft for rotation through a bearing. The output shaft is formed such that its shaft end on the left side of the vehicle body is protruded leftwardly from the transmission case, and to this shaft end is connected a rear wheel drive chain.

On the other hand, the body frame to which the engine is mounted, comprises a pair of left and right tank rails extending downwardly toward the rear from a head pipe, a rear arm bracket extending downwardly from the rear end of the tank rail, and the like. The front half of the tank rail is formed to cover, from the side, the rear end of a cylinder head and a carburetor provided upwardly of and rearwardly of the cylinder head. The rear half of the tank rail is formed such that the width in the vertical direction is narrower than that of the front half to form a maintenance space below. The maintenance space is formed such that the clutch and the large reduction gear can be removed rightwardly and the shift mechanism of the transmission can be removed leftwardly.

However, in the conventional motorcycle as described above, since rigidity of the tank rail of the body frame becomes relatively low, control stability is lowered and higher output and higher performance cannot be effected. The reason for relatively low rigidity of the tank rail is that the width of the rear half of the tank rail in the vertical direction is narrower than that of the front half.

In order to eliminate the foregoing disadvantage, it might be considered that the large reduction gear is formed having a smaller outside diameter, or that the transmission is formed having a lower position so that the position of the upper end of the maintenance space formed downwardly of the rear half is lowered, thereby forming the rear half of the tank rail having large width in the vertical direction.

However, to decrease the outside diameter of the large reduction gear while securing the required reduction ratio, the small reduction gear should be formed having a smaller outside diameter, which prevents formation of the small reduction gear on the crank web. Thus, the small reduction gear needs to be formed adjacent to the crank web, which lengthens the crankshaft axially. If the position of the transmission is lowered, the large reduction gear should be located rearwardly of the vehicle body, which increases the longitudinal length of the engine and decreases its minimum ground clearance.

In view of the foregoing, an object of this invention is to provide a motorcycle having an improved rigidity of the tank rail without changing the longitudinal length and the minimum ground clearance of the engine.

This objective is solved in an inventive manner by a motorcycle having an engine and a transmission arranged in a transmission case provided at a rear upper side of the engine, wherein a clutch and an input shaft of the transmission are mountable to and dismountable from the transmission case from opposite lateral sides of the transmission case.

Preferably, the transmission case comprises mated upper and lower cases, and a plate for closing a transmission removal opening of the upper and lower cases, wherein the transmission case is arranged rearwardly and obliquely upwardly of a crankshaft of the engine.

According to a preferred embodiment, there is provided a gear housing for housing a large reduction gear, said large reduction gear being rotatably supported on the input shaft of the transmission, wherein a rotation of the crankshaft is transmitted from the large reduction gear via the clutch to the input shaft.

Therein, a housing cover might be provided being attached to the gear housing and closing the gear housing, said housing cover having a cylindrical wall member accommodating the clutch.

Therein, it is further preferable if the clutch and the input shaft are mountable to or dismountable from the transmission case in different lateral directions of the transmission case, with the large reduction gear remaining in the transmission case, in particular in the gear housing.

Said large reduction gear might be held in the transmission case for rotation, wherein said clutch might be configured to be mounted or dismounted in one lateral direction with respect to said input shaft and said large reduction gear while the input shaft and the transmission gears supported by the input shaft might be configured to be mounted or dismounted in the other lateral direction with respect to the transmission case.

According to a further preferred embodiment, there is provided a pair of tank rails, wherein the engine is mounted downwardly of said pair of tank rails on a body frame.

Therein, it is preferable that a lower end of the tank rail is adapted to overlap, in profile, an upper end of the large reduction gear at the outer side thereof.

Beneficially, upper ends of the cylindrical wall member and a peripheral wall of the gear housing are arranged at positions further inward than the other parts arranged below the tank rails, defining a wide open space between the clutch and the one of the tank rails arranged adjacent to the clutch, wherein the adjacent tank rail extends in the vicinity of and upwardly of the clutch in said wide open space.

According to another embodiment, there are provided a cylindrical member provided between the input shaft of the transmission and a bearing on the transmission case for supporting the input shaft for rotation, wherein a shaft end of the cylindrical member is protruded from said bearing outwardly of the transmission case, and wherein onto the protruded portion is fitted a cylindrical body provided at a shaft center of the large reduction gear.

According to yet another embodiment, there is provided a transmission drum for driving at least one shift fork of the transmission being separable in the lateral direction thereof into a bottomed cylindrical first drum having a cam groove engageable with the shift fork and a second drum engaged with an opening of the first drum.

Therein, it is preferable that the second drum is held in the transmission case and that to the second drum is connected a shift mechanism.

Beneficially, said first drum, said shift fork and a shift fork support shaft are configured to be mounted or dismounted in the same direction as the transmission gears of the transmission.

Further preferably, a lower end of the one of the tank rails which is arranged adjacent to the shift mechanism overlaps, in profile, an upper end of the shift mechanism of the transmission at the outer side thereof.

The above object of the present invention is also solved in an inventive manner by a motorcycle having an engine comprising a crankshaft and a transmission comprising input and output shafts, said input and output shafts and said crankshaft being arranged in a cross-direction of the motorcycle, wherein said input and output shafts are arranged vertically to each other and rearwardly and obliquely upwardly to the crankshaft.

Preferably, the output shaft is disposed rearwardly of and obliquely downwardly of the input shaft.

In the following, the present invention is explained in greater detail with respect to several embodiments thereof in conjunction with the accompanying drawings, wherein:
- Fig. 1: is a side view of a motorcycle according to an embodiment;
- Fig. 2: is a side view of a body frame and an engine viewed from the right side of the body;
- Fig. 3: is a side view on an enlarged scale of a transmission removal opening;
- Fig. 4: is a vertical cross-sectional view of a transmission;
- Fig. 5: is sectional views on an enlarged scale of a portion at which a large reduction gear is held;
- Fig. 6: is a vertical cross-sectional view of a transmission drum and a shift mechanism of the transmission;
- Fig. 7: is a perspective view of the engine; and
- Fig. 8: is a sectional view on an enlarged scale of a portion of the transmission.

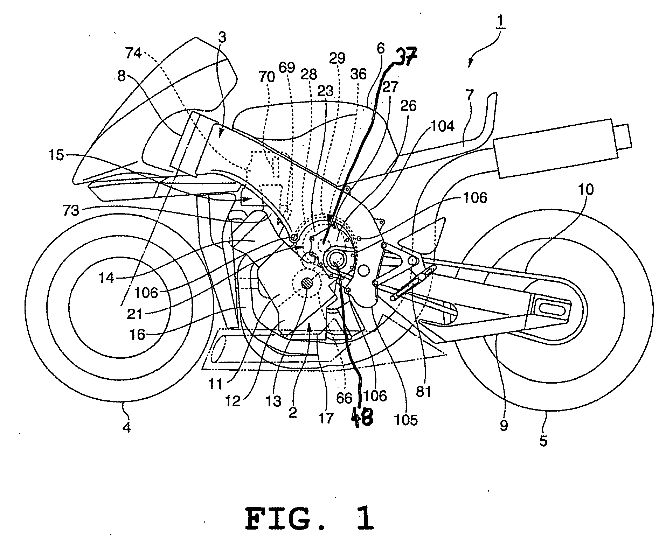

Now, an embodiment of a motorcycle will be described in detail with reference to Fig. 1-Fig. 8.

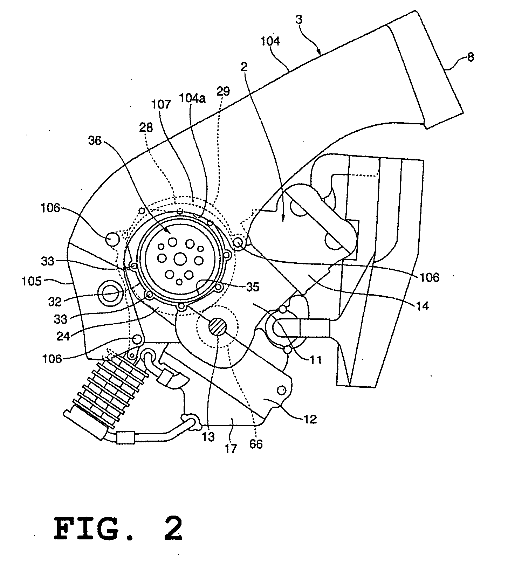

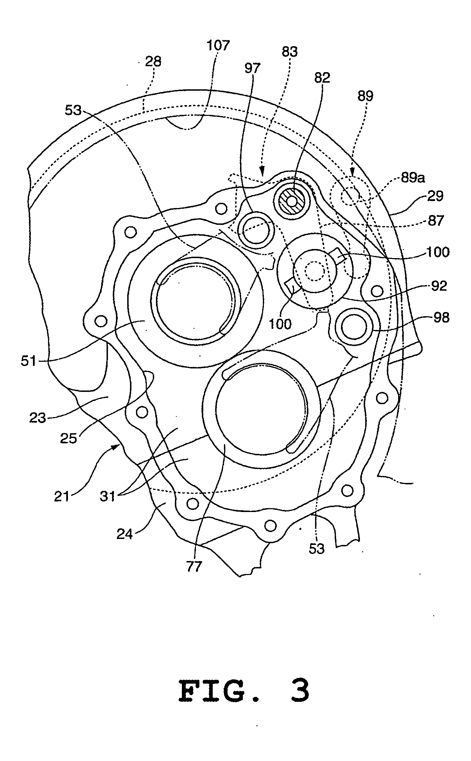

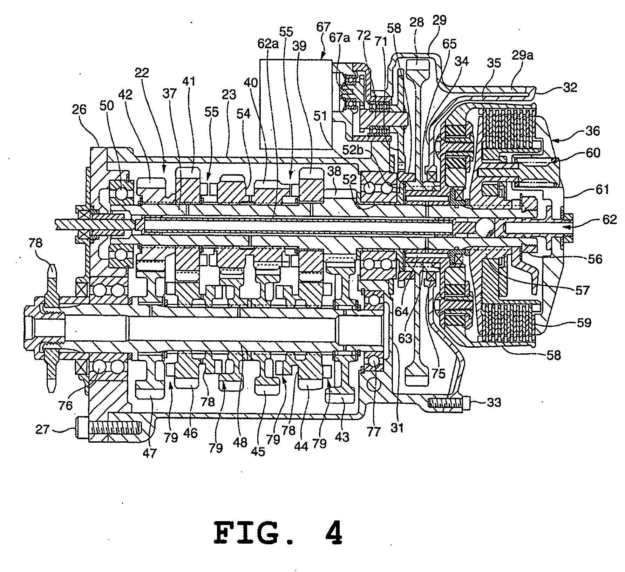

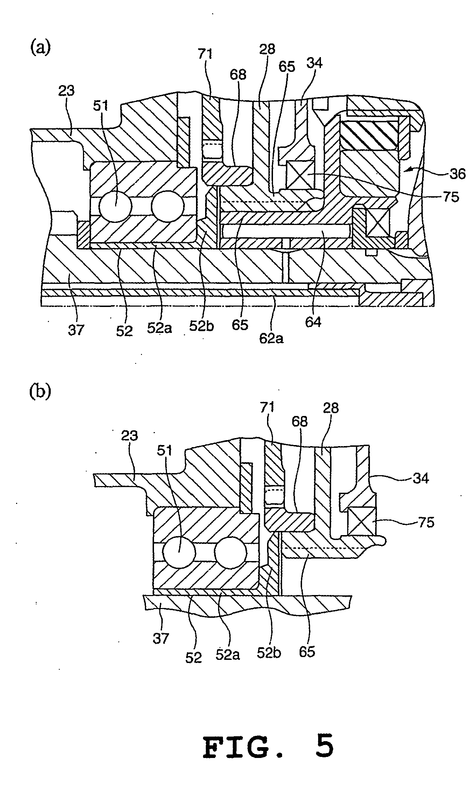

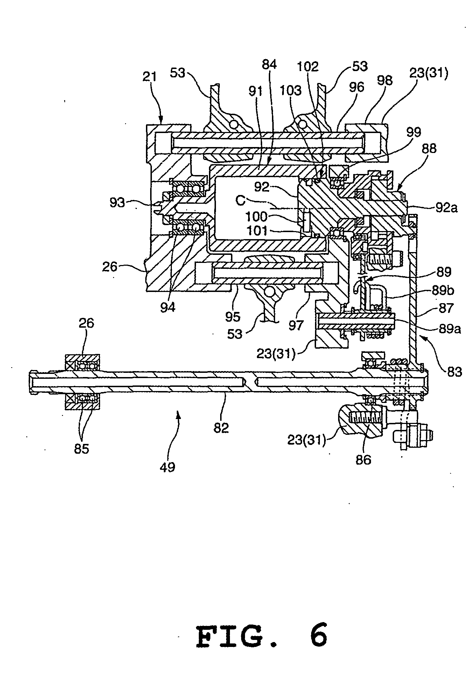

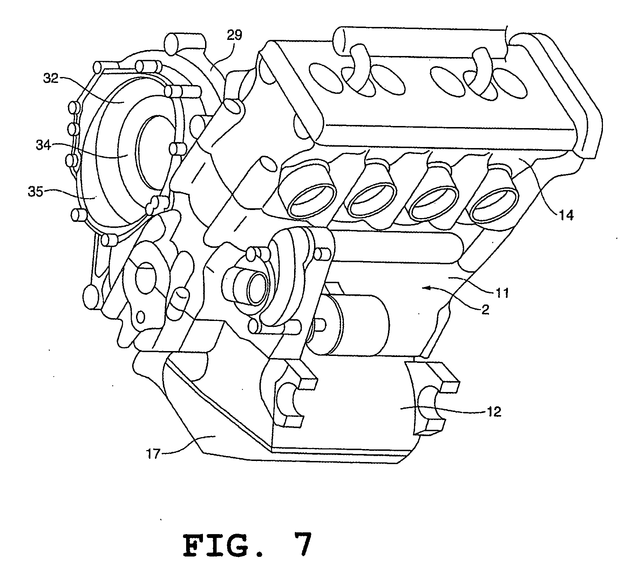

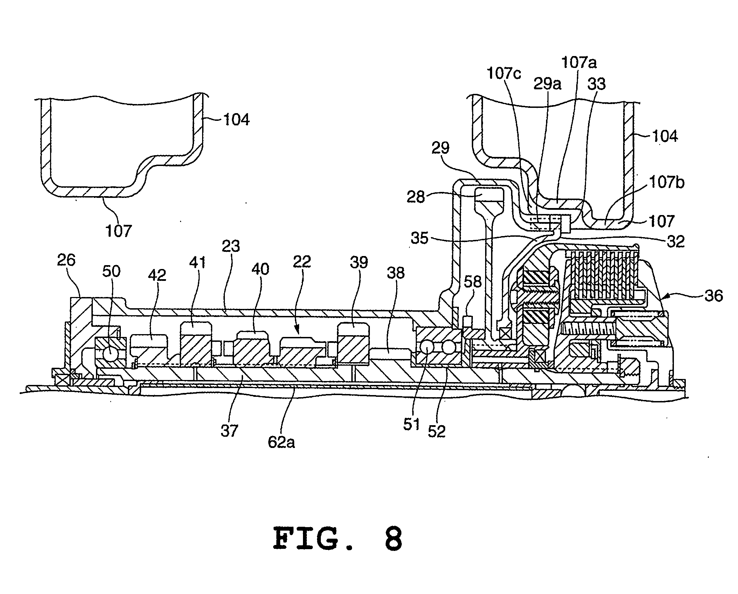

Fig. 1 is a side view of a motorcycle according to this embodiment; Fig. 2 is a side view of a body frame and an engine viewed from the right side of the body; Fig. 3 is a side view on an enlarged scale of a transmission removal opening; Fig. 4 is a vertical cross-sectional view of a transmission; and Fig. 5 is sectional views on an enlarged scale of a portion at which a large reduction gear is held, Fig. 5(a) is a view with a clutch and the transmission assembled in a transmission case, and Fig. 5(b) is a view with the clutch and the transmission removed from the transmission case. Fig. 6 is a vertical cross-sectional view of a transmission drum and a shift mechanism of the transmission; Fig. 7 is a perspective view of the engine; and Fig. 8 is a sectional view on an enlarged scale of a portion of the transmission.

In these figures, reference numeral 1 designates a motorcycle according to this embodiment. The motorcycle 1 is a vehicle for racing, to a body frame 3 of which is mounted an engine 2 configured such that its longitudinal length is shortened to improve running performance. Reference numeral 4 designates a front wheel of the motorcycle 1, reference numeral 5 a rear wheel, reference numeral 6 a fuel tank and reference numeral 7 a seat. The front wheel 4, not shown in Fig. 1, as in a conventional motorcycle, is supported for rotation on a telescopic front fork attached for rotation to a head pipe 8 of the body frame 3. At the upper end of the front fork is provided a steering handle. The rear wheel 5 is supported on the body frame 3 by a rear arm 9 for swinging movement in the vertical direction, to which is transmitted power from the engine 2 through a drive chain 10.

The engine 2 is of a water-cooled DOHC four-cylinder type; a crankshaft 13 is supported for rotation by a cylinder body 11 and a crankcase 12 connected to the lower end of the cylinder body; and to a cylinder head 14 mounted to the upper end of the cylinder body 11 are connected an air intake 15 and an exhaust pipe 16. To the lower end of the crankcase 12 is attached an oil pan 17.

The cylinder body 11 and the crankcase 12 are formed, at the rear end of the vehicle body, with a transmission case 21 described later, and a transmission 22 described later is supported by the transmission case 21 (see Fig. 4). The transmission case 21 comprises an upper case 23 formed integrally with the cylinder body 11 at its rear end, a lower case 24 (see Fig. 2) formed integrally with the crankcase 12 at its rear end, and a plate 26 for closing a transmission removal opening 25 (see Fig. 3) formed at the left ends of these cases 23, 24. The plate 26 is detachably attached to the upper case 23 and the lower case 24 with fixing bolts 27.

The transmission case 21 of this embodiment is formed such that it is located rearwardly of and obliquely upwardly of the crankshaft 13. That is, the engine 2, in profile shown in Fig. 1, is arranged such that its cylinder section and the transmission case 21 are formed extending obliquely upwardly toward the front and rearwardly, respectively, assuming the shape of the letter Y, and that its longitudinal length is shortened. Also, as shown in Figs. 1, 4, and 7, at the right end of the upper case 23 is formed integrally a gear housing 29 for housing a large reduction gear 28 described later.

The gear housing 29 is raised upwardly from a portion on the left side of the upper case 23 and assumes the shape of a cylinder protruding rightwardly from the right side-wall 31 (see Fig. 4) of the upper case 23. Further, to the right end of the gear housing 29 is fixed a housing cover 32 for defining the inside (oil splashing environment) and the outside of the gear housing 29, with fixing bolts 33 (see Fig. 4), as shown in Fig. 4.

The housing cover 32, as shown in Fig. 7, is formed of an annular side-wall 34 and a cylindrical wall 35 protruding rightwardly from the side-wall 34, and configured such that a clutch 36 described later (see Fig. 4) can be housed inside the cylindrical wall 35. Also, the cylindrical wall 35, as shown in Fig. 4, extends laterally at the inner side of a peripheral wall 29a of the gear housing 29 and is connected, at the outer end, to the forward end of the peripheral wall 29a. The cylindrical wall 35 and the peripheral wall 29a are configured such that they are brought as close to the clutch 36 as possible, and have the function of preventing a riders leg from touching the circumference of the clutch 36.

The cylindrical wall 35 and the peripheral wall 29a are formed such that their upper ends are at positions further inward than the other lower parts, as shown in Fig. 7 and Fig. 8. This is because a wide open space is provided over the clutch 36, as shown in Fig. 8. In this embodiment, a tank rail 104 extends in the vicinity of and upwardly of the clutch 36, as described later.

The transmission 22 is a so-called cassette type transmission, and as shown in Fig. 4, comprises an input shaft 37, an output shaft 48 connected to the input shaft 37 by first to tenth transmission gears 38 to 47, a shift mechanism 49 (see Fig. 6) for operating the transmission gears, and the like. The transmission mechanism and the like of the transmission 22 are of the same construction as a conventional well-known system and detailed description is omitted.

The input shaft 37 is provided rearwardly of and obliquely upwardly of the crankshaft 13 and parallel thereto; and as shown in Fig. 4, it is supported, at the left end, on the plate 26 by a bearing 50 for rotation and at the right end, supported on the right side-wall 31 of the upper case 23 by a bearing 51 for rotation. The input shaft 37 is mounted, at the left end, to the plate 26 such that its axial movement is prohibited.

Also, between the bearing 51 supporting the right end of the input shaft 37 and the input shaft 37 is fitted a cylindrical gear holder 52, as shown in Fig. 4 and Fig. 5. The gear holder acts as a means of holding a large reduction gear 28 described later and is formed with a cylinder 52a fitted between the bearing 51 and the input shaft 37, and a flange 52b protruding rightwardly from the bearing 51. The flange 52b is formed in the shape of a disk extending radially outwardly from the right end of the cylinder 52a. The fitting section of the gear holder 52 and the input shaft 37 is configured such that the input shaft 37 can be pulled out leftwardly from the gear holder 52.

On the input shaft 37 in a portion crossing the transmission case 21 are mounted the first to fifth transmission gears 38 to 42. The third transmission gear 40 located in the axial middle of these transmission gears 38 to 42 is formed with an annular groove 54 for engagement with a shift fork 53 described later (see Fig. 3), and mounted on the input shaft 37 for axial movement by spline fitting. The third transmission gear 40 is arranged such that its axial movement through pushing by the shift fork 53 in one direction or the other causes it to be connected or disconnected, at both axial ends, to and from the adjacent second or third transmission gear 39, 41 through a dog clutch 55.

Also, the input shaft 37 is protruded, at the right end, from the side-wall 31 of the upper case 23 therethrough toward the outside, and to this protruded end is mounted the clutch 36.

The clutch 36, as shown in Fig. 4, is of the same construction as a well-known conventional dry multiple-plate clutch and comprises a clutch center 57 fixed to the input shaft 37 with a lock nut 56 in spline fitting relation, a clutch outer 58 for covering the clutch center 57 therearound, multiple clutch plates 59 provided therebetween, a pressure plate 61 for pressing these clutch plates 59 through spring force of clutch springs 60 to hold the plates in association with the clutch center 57, a lifter mechanism 62 for pushing the pressure plate 61 in the direction of separation from the clutch center 57 against the spring force of the clutch springs 60, and the like.

The clutch outer 58 of the clutch 36 is provided, at the inner end, with a cylindrical shaft 63, and supported for rotation on the input shaft 37, with a needle bearing 64 disposed inside the cylindrical shaft 63 fitted on the input shaft 37. The cylindrical shaft 63 is configured such that it can be removed from the input shaft 37 rightwardly. The clutch center 57 and the other members mounted on the input shaft 37 in the clutch 36 are also assembled so as to be removed from the input shaft 37 rightwardly. That is, the clutch 36 is assembled detachably to the input shaft 37.

On the outside circumferential surface of the cylindrical shaft 63 is mounted the large reduction gear 28 for transmitting the rotation of the crankshaft 13 to the clutch outer 58 for rotation with the cylindrical shaft 63 by spline fitting. The large reduction gear 28 is meshed with a small reduction gear 66 (see Fig. 1 and Fig. 2) of the crankshaft 13, with a boss 65 at its shaft center connected to the cylindrical shaft 63 by spline fitting as described above. The boss 65, as shown in Fig. 5, is formed such that the outside diameter of its inner end is approximately in agreement with that of the flange 52b of the gear holder 52 and faces the right end face of the flange 52b.

Also, on the boss 65 at its inner end is press-fitted an auxiliary gear 68 for transmitting the rotation of the large reduction gear 28 to a fuel pump 67 (see Fig. 4). The auxiliary gear 68 is fixed to the boss 65, protruded inwardly therefrom, and in this inwardly protruded portion is fitted the outside circumference of the flange 52b. As a result of the auxiliary gear 68 fitted on the flange 52b, the large reduction gear 28 having the auxiliary gear 68 is held for rotation on the transmission case 21 through the gear holder 52 and the bearing 51.

The fuel pump 67 is a device for supplying fuel to first and second injectors 69, 70 (see Fig. 1 ) provided on the air intake 15, and as shown in Fig. 4, power is transmitted to a rotary shaft 67a through a middle shaft 72 having an intermediate gear 71 meshing with the auxiliary gear 68. The first injector 69 is mounted on a throttle valve device 73, and the second injector 70 is provided inside an air cleaner 74.

The outer end of the boss 65 extends into the shaft center of the annular side-wall 34 of the housing cover 32. Between the side-wall 34 and the boss 65 is provided a seal member 75 for preventing oil from leaking toward the clutch 36 from the space inside the housing cover 32.

The lifter mechanism 62 of the clutch 36 is configured, as is familiar conventionally, such that the clutch 36 is disconnected when a push rod 62a inserted in the hollow part of the input shaft 37 is pushed by an operation mechanism (not shown) to be moved rightwardly, and connected when the push rod 62a is moved in the opposite direction.

The output shaft 48, as shown in Fig. 1, is disposed rearwardly of and obliquely downwardly of the input shaft 37 and parallel thereto, and as shown in Fig. 4, it is supported, at the left end, on the plate 26 by a bearing 76 for rotation, and at the right end, on the right side-wall 31 of the upper case 23 by a bearing 77 for rotation. In this embodiment, the output shaft 48 is disposed at the mating portion of the upper and lower cases 23, 24, and the bearing 77 supporting the right end of the output shaft 48 is held between both of these upper and lower cases 23, 24.

The output shaft 48 is mounted, at the left end, to the plate 26 such that its axial movement is restricted. Also, the output shaft 48 is protruded, at the left end, from the plate 26 therethrough toward the outside, and to the protruded end is fixed a sprocket 78 for the rear wheel drive chain 10 for the rear wheel 5. On the other hand, the right end of the output shaft 48 is formed such that the output shaft can be pulled out leftwardly from the bearing 77.

On the output shaft 48 in a portion crossing the inside space of the transmission case 21 are provided the sixth to tenth transmission gears 43 to 47. The seventh transmission gear 44 and the ninth transmission gear 46 of these transmission gears 43 to 47 are of the same construction as the third transmission gear 40 on the input shaft 37. Annular grooves for engagement with the shift forks formed in the seventh and ninth transmission gears 44, 46 are designated by reference numerals 7, 8, and a dog clutch is shown by reference numeral 79.

The shift device 49 of the transmission 22 switches gear positions of the first to tenth transmission gears 38 to 47 through operation of a shift pedal shown in Fig. 1 by reference numeral 81, and as shown in Fig. 3 and Fig. 6, comprises a shift rod 82 connected to the shift pedal through an unillustrated link mechanism, a transmission drum 84 connected to the shift rod 82 through a shift mechanism 83, three shift forks 53 driven by the transmission drum 84 for operating the third, seventh, and ninth transmission gears 40, 44, 46, and the like.

The shift rod 82, as shown in Fig. 6, penetrates the transmission case 21 laterally, and it is supported, at the left end, on the plate 26 through a bearing 85 for rotation, and at the right end, on the right side-wall 31 of the upper case 23 through a bearing 86 for rotation. The shift rod 82 is mounted, as shown in Fig. 3, at a position rearwardly of and obliquely upwardly of the bearing 51 for supporting the input shaft (input shaft 37). The bearing 85 supporting the left end of the shift rod 82 is formed such that it can be removed leftwardly from the shift rod 82 together with the plate 26.

The shift mechanism 83 comprises a lever 87 fixed to the right end of the shift rod 82, a drum drive segment 88 connected to the rotational end of the lever 87, a drum stopper 89 for restricting rotation of the transmission drum 84, and the like, and is disposed at the outside of the right side-wall 31 of the upper case 23. The lever 87 is formed to extend downwardly from the right end of the shift rod 82, the rotational end of which is engaged with the drum drive segment 88.

The drum drive segment 88 is adapted to rotate the transmission drum 84 by a certain angle at a time, the inner end of which is attached to the transmission drum 84 described later. The drum stopper 89, as shown in Fig. 6, is mounted for rotation on a support shaft 89a provided on the right side-wall 31 of the upper case 23, the forward end of which is pressed against an engagement recess (not shown) of the drum drive segment 88 by the spring force of a torsion spring 89b. The support shaft 89a of the stopper 89 is mounted, as shown in Fig. 3, at a position rearwardly of and obliquely upwardly of the shift rod 82 and positioned in the vicinity of the outer edge of the gear housing 29 in the upper case 23.

The transmission drum 84, as shown in Fig. 6, comprises a first drum 91 formed in the shape of a bottomed cylinder and a second drum 92 mounted to the opening end of the first drum 91. The first drum 91 has a support shaft 93 at the left end, and is supported for rotation on the plate 26 through a bearing 94 fitted on the support shaft 93. The connecting section of the first drum 91 and the plate 26 is arranged such that no lateral movement of one of these members to the other is allowed.

On the outside circumferential surface of the first drum 91 is formed, as in a conventional transmission drum, a cam groove (not shown) for engagement with a guide pin (not shown) of the shift fork 53. Regarding the shift fork 53, a plurality of shift forks are provided, one of which is engaged with the third transmission gear 40 on the input shaft 37 and the others of which are engaged with the seventh and ninth transmission gears 44, 46 on the output shaft 48, and supported on support shafts 95, 96, respectively, for sliding movement. These support shafts 95, 96 are fitted, at their right ends, in support bosses 97, 98 of the upper case 23 for insertion and extraction, and configured such that they can be pulled out leftwardly from these bosses 97, 98.

The second drum 92 of the transmission drum 84 has the left end extending into the opening end of the first drum 91 and coupled to the first drum 91 by an engagement structure described later, and is supported on the right side-wall 31 of the upper case 23 by a bearing 99 for rotation. The second drum 92 is formed to penetrate the side-wall 31 laterally, and to its shaft section 92a protruded rightwardly from the side-wall 31 is attached the drum drive segment 88 of the shift mechanism 83. In this embodiment, attachment of the drum drive segment 88 to the shaft section 92a restricts the axial movement of the second drum 92 to the bearing 99.

The coupling section of the first and second drums 91, 92 adopts an engagement structure in which, as depicted below the center line shown by a single dot and dash line C in Fig. 6, a pin 100 provided extending radially in the second drum 92 is brought into engagement with an engagement groove 101 of the first drum 91, and another engagement structure in which, as depicted above the center line C, the first and second drums 91, 92 are coupled, for example, by spline fitting, for transmission of rotational force from the second drum 92 to the first drum 91.

Regarding the use of the pin 100, the pins 100 are provided in the second drum 92 at diametrically opposite locations as shown in Fig. 3.

In a portion of the coupling section of the first and second drums 91, 92 further rightward than the pin engagement section or the spline fitting section, the second drum 92 is fitted in the first drum 91, over the entire circumference, as shown in Fig. 6. The circumferential surface of this fitting portion 102 is formed in the shape of a taper with increasing diameter toward the right and provided with an O-ring 103 thereon.

The body frame 3 carrying the engine 2 as described above comprises, as shown in Fig. 1, a pair of left and right tank rails 104 extending downwardly toward the rear from the head pipe 8 and rear arm brackets 105 extending downwardly from the rear ends of the tank rails 104, and is formed of an aluminum alloy. The head pipe 8 and the rear arm brackets 105 are formed by casting in this embodiment, and welded to the tank rails 104. Engine mounting bolts 106 for mounting the engine 2 on the body frame 3 are provided at a total of three locations, two at the rear of the tank rail 104 and the other at the lower end of the rear arm bracket 105.

The tank rails 104 are each formed in the shape of an angular tube with a plurality of plate members of an aluminum alloy being welded and assembled. The tank rails 104 are formed such that they have lateral width sufficient enough to accommodate the air intake 15 at the front, and at the rear, they are located above both lateral ends of the transmission 22, as shown in Fig. 8. The rear lower end of the tank rail is formed into an upwardly convex arcuate shape to follow the contour of the gear housing 29 of the upper case 23, in profile as shown in Fig. 1 and Fig. 2. The arcuate portion is shown in Fig. 2 by reference numeral 104a. In an outer portion of this rear lower end is formed integrally a downward extension 107 protruding downwardly further than the other portions as shown in Fig. 8. The downward extension 107 is formed approximately throughout the arcuate portion 104a.

The downward extension 107 of the right tank rail 104 is positioned, as shown in Fig. 2 and Fig. 8, at the outside of the upper end of the large reduction gear 28, and formed overlapping the upper end of the large reduction gear 28, in profile as shown in Fig. 2. The bottom of the downward extension 107 is formed, as shown in Fig. 8, facing the gear housing 29 of the upper case 23 and the clutch 36 with clearance.

Specifically, the downward extension 107 is formed with a first extension 107a approaching the peripheral wall 29a of the gear housing 29 from above and a second extension 107b extending downwardly in a portion further outward than the first extension 107a and approaching the clutch 36 from above. The first extension 107a is formed such that a portion facing the fastening section of the fixing bolts 33 for the housing cover is partly raised upwardly, and it approaches the peripheral wall 29a as close as possible without interference with the fastening section. The raised portion is designated by reference numeral 107c in Fig. 8. That is, the lower edge of the downward extension 107 is set to a position at which the downward extension 107 does not interfere with the clutch 36 when it is mounted/dismounted with respect to the transmission case 21.

The reason why the downward extension 107 can be formed in this way is that, as described above, the large reduction gear 28 need not be removed from the transmission case 21 at the time of transmission replacement and consequently, the housing cover 32 need not be removed as well.

As shown in this embodiment, as a result of the downward extension 107 approaching the clutch 36, the exposed portion at the top of the clutch 36 is covered by the tank rail 104 from above and the tank rail 104 is interposed between the rider's leg and the clutch 36, so that the leg can be protected by the tank rail 104.

Also, the downward extension 107 is formed, as shown by a double dot and dash line in Fig. 3, overlapping, in profile, the drum stopper 89 of the shift mechanism 83. In other words, the tank rail 104 is extended such that its lower end overlaps, in profile, the upper end of the shift mechanism 83 at the outside thereof.

Regarding the tank rail 104, in this embodiment, the right and left tank rails are formed symmetrical to each other, and the left tank rail 104 is also formed with the downward extension 107. The reason why the left and right tank rails 104 are formed symmetrical to each other is to avoid changes in running conditions both in a right turn and in a left tum during running.

Although the plate 26 of the transmission 22 is disposed downwardly of the downward extension 107 of the left tank rail as shown in Fig. 1 and Fig. 8, the upper edge of the plate 26 is at approximately the same height as the upper edge of the clutch 36, so that the downward extension 107 does not interfere with the plate 26 when it is attached/detached with respect to the upper case 23 and the lower case 24.

In the transmission 22 of the motorcycle 1 described above, the input shaft 37, output shaft 48, the shift forks 53 engaging with the transmission gears 38 to 47 on the two shafts, the first transmission drum 84, and the like can be removed leftwardly from the transmission case 21, with the clutch 36 removed rightwardly from the input shaft 37. To remove the clutch 36 from the input shaft 37, first remove the pressure plate 61, then loosen the lock nut 56 and pull out the clutch center 57 and the clutch outer 58 rightwardly. At this time, the large reduction gear 28 is connected to the gear holder 52 of the transmission case 21 through the auxiliary gear 68, and as shown in Fig. 5(b), held in the transmission case 21 through the gear holder 52 and the bearing 51.

As a result that the plate 26 is removed from the upper and lower cases 23, 24 and pulled out leftwardly, with the clutch 36 removed from the input shaft 37, the right ends of the input shaft 37 and the output shaft 48 are pulled out from the bearings 51, 77 and the two shift fork support shafts 95, 96 of the shift device 49 are pulled out from the bosses 97, 98 of the upper case 23. At the same time, the first drum 91 is separated from the second drum 92. At this time, the shift rod 82 remains with the transmission case 21 after the left bearing 85 is removed together with the plate 26. Therefore, the transmission 22 can be mounted/dismounted with respect to the transmission case 21 without mounting/dismounting the large reduction gear 28.

Thus, since the clutch 36 and the main parts of the transmission 22 can be mounted/dismounted with respect to the transmission case 21, with the large reduction gear 28 remaining with the transmission case 21, the downward extension 107 can be formed such that the minimum space allowing passage of the clutch 36 and the transmission gears is formed downwardly of the tank rail 104 at its rear lower end. As a result, rigidity of the tank rail 104 can be increased due to the formation of the downward extension 107, compared with the conventional system.

In addition, in this embodiment, since the large reduction gear 28 can be held using the bearing 51 supporting for rotation the input shaft 37 of the transmission 22, a bearing exclusively for holding the large reduction gear 28 in the transmission case 21 is dispensed with. Therefore, the large reduction gear 28 can be held in the transmission case 21, with simple construction and at reduced costs.

Further, in this embodiment, in replacing the transmission gears 38 to 47, the first drum 91, the shift forks 53 and the shift fork support shafts 95, 96 can be mounted/dismounted with respect to the transmission case 21 together with the transmission gears. At this time, since the shift mechanism 83 need not be removed from the transmission case 21 at the time of gear replacement, for example, for a gear ratio change, it remains with the transmission case 21. Since the upper end of the shift mechanism 83 is at a position further inward than the downward extension 107 of the tank rail 104, the transmission removal opening 25 for passing the transmission gears, the first drum 91 and the like, and the plate 26 for closing this opening, can be formed to be of the minimum necessary size. Therefore, the cutout (arcuate portion 104a) formed in the tank rail 104 in order not to overlap the transmission removal opening 25 or the plate 26, can be formed to be small, improving rigidity of the tank rail 104.

In the transmission 22 in this embodiment, when the transmission gears 38 to 47 are mounted/dismounted with respect to the transmission case 21, the mounting/dismounting can be performed, with the shift forks 53 being engaged with the transmission gears 40, 44, and 46 and the first drum 91 and supported on the plate 26 through the shift fork support shafts 95, 96. That is, these members can be handled as a single assembly. Therefore, workability can be improved, compared with when transmission replacement is performed while supporting the shift forks by hand to prevent them from slipping off the transmission gears as in the conventional cassette type transmission.

The description above discloses (amongst others) a motorcycle in which an engine is mounted downwardly of a pair of tank rails on a body frame and upwardly of and rearwardly of a crankshaft of the engine is provided a transmission for transmitting rotation of the crankshaft from a large reduction gear located on an input shaft through a clutch at the outer end thereof to the input shaft, wherein in said motorcycle said large reduction gear is held in a transmission case for rotation, said clutch is configured to be mounted/dismounted in one lateral direction with respect to said input shaft and said large reduction gear while the input shaft and transmission gears on the input shaft are configured to be mounted/dismounted in the other lateral direction with respect to the transmission case, and said tank rail is extended such that its lower end overlaps, in profile, the upper end of said large reduction gear at the outer side thereof.

Since the clutch, the input shaft and the transmission gears can be mounted/dismounted with respect to the transmission case, with the large reduction gear remaining with the transmission case, the tank rail can be formed extending downwardly such that the minimum space allowing passage of the clutch and the transmission gears is formed downwardly of the tank rail at its lower end.

In other words, since the clutch, input shaft and transmission gears can be mounted/dismounted with respect to the transmission case, with the large reduction gear remaining with the transmission case, the lower end of the tank rail can be formed extending downwardly such that the clutch and transmission gears are allowed to pass under the tank rail.

Therefore, since the rear portion of the tank rail at a position upwardly of the transmission can be formed to be wide in the vertical direction, compared with the conventional system, rigidity of the tank rail can be improved without changing the longitudinal length and the minimum ground clearance of the engine.

There is disclosed a further embodiment of the motorcycle in which between the input shaft of the transmission and a bearing, on the transmission case, for supporting the input shaft for rotation, is provided a cylinder, the shaft end of the cylinder is protruded from said bearing outwardly of the transmission case, and onto the protruded portion is fitted a cylindrical body provided at the shaft center of the large reduction gear. Since the large reduction gear can be held using the bearing supporting the input shaft of the transmission for rotation, a bearing exclusively for holding the large reduction gear in the transmission case is dispensed with. In other words, since the large reduction gear can be held using the bearing supporting for rotation the input shaft of the transmission, a bearing exclusively for holding the large reduction gear in the transmission case is dispensed with. Therefore, the large reduction gear can be held in the transmission case, with simple construction and at reduced costs.

There is disclosed a still further embodiment of the motorcycle in which a transmission drum for driving a shift fork of the transmission is configured to be separable in the lateral direction into a bottomed cylindrical first drum having a cam groove engageable with the shift fork and a second drum engaged with an opening of the first drum for detachment; the second drum is held in the transmission case and to the second drum is connected a shift mechanism; said first drum, said shift fork and a shift fork support shaft are configured to be mounted/dismounted in the same direction as the transmission gears of the transmission; and the tank rail is extended such that its lower end overlaps, in profile, the upper end of the shift mechanism of the transmission at the outer side thereof.

Accordingly, in replacing the transmission gears, the first drum, the shift fork and the shift fork support shaft can be mounted/dismounted with respect to the transmission case together with the transmission gears. At this time, since the shift mechanism need not be removed from the transmission case at the time of gear replacement, for example, for a gear ratio change, it remains with the transmission case. Since the upper end of the shift mechanism is at a position further inward than the lower end of the tank rail, a transmission removal opening for passing the transmission gears, the first drum, and the like, and a member for closing the opening, can be formed to be of the minimum necessary size. Therefore, a cutout formed in the tank rail in order not to overlap the transmission removal opening and the member for closing the opening, can be formed to be small, improving rigidity of the tank rail.

In other words, in replacing the transmission gears, the first drum, the shift forks, and the shift fork support shafts, can be mounted/dismounted with respect to the transmission case together with the transmission gears. At this time, since the upper end of the shift mechanism is at a position further inward than the lower end of the tank rail, the transmission removal opening for passing the transmission gears, the first drum, and the like, and the member for closing this opening, can be formed to be of the minimum necessary size.

Therefore, the cutout formed in the tank rail in order not to overlap the transmission removal opening or the member for closing this opening, can be formed to be small.

Therefore, the tank rail can be formed such that it is extended downwardly so as to be located at the side of the shift mechanism and have large vertical width, improving rigidity of the tank rail further.

In short, to improve rigidity of a tank rail without changing the longitudinal length and the minimum ground clearance of an engine, it is preferable to provide a large reduction gear 28 held in a transmission case 21 for rotation, a clutch 36 configured to be mounted/dismounted in one lateral direction with respect to an input shaft 37 and the large reduction gear 28 of a transmission 22, an input shaft 37 and transmission gears on the input shaft 37 configured to be mounted/dismounted in the other lateral direction with respect to the transmission case 21, and a tank rail 104 extended such that its lower end overlaps, in profile, the upper end of the large reduction gear 28 at the outer side thereof.

## Claims

1. Motorcycle having an engine (2) and a transmission (22) arranged in a transmission case (21) provided at a rear upper side of the engine (2), wherein a clutch (36) and an input shaft (37) of the transmission (22) are mountable to and dismountable from the transmission case (21) from opposite lateral sides of the transmission case (21).

2. Motorcycle according to claim 1, **characterized in that** the transmission case (21) comprises mated upper and lower cases (23,24), and a plate (26) for closing a transmission removal opening (25) of the upper and lower cases (23,24), wherein the transmission case (22) is arranged rearwardly and obliquely upwardly of a crankshaft (13) of the engine (2).

3. Motorcycle according to claim 1 or 2, **characterized by** a gear housing (29) for housing a large reduction gear (28), said large reduction gear (29) being rotatably supported on the input shaft (37) of the transmission (22), wherein a rotation of the crankshaft (13) is transmitted from the large reduction gear (28) via the clutch (36) to the input shaft (37).

4. Motorcycle according to claim 3, **characterized by** a housing cover (32) attached to the gear housing (29) and closing the gear housing (29), said housing cover (32) having a cylindrical wall member (35) accommodating the clutch (36).

5. Motorcycle according to claim 3 or 4, **characterized in that** the clutch (36) and the input shaft (37) are mountable to or dismountable from the transmission case (21) in different lateral directions of the transmission case (22), with the large reduction gear (28) remaining in the transmission case (21), in particular in the gear housing (29).

6. Motorcycle according to claim 5, **characterized in that** said large reduction gear (28) is held in the transmission case (21) for rotation, wherein said clutch (36) is configured to be mounted or dismounted in one lateral direction with respect to said input shaft (37) and said large reduction gear (28) while the input shaft (37) and the transmission gears supported by the input shaft (37) are configured to be mounted or dismounted in the other lateral direction with respect to the transmission case (21).

7. Motorcycle according to at least one of the preceding claims 1 to 6, **characterized by** a pair of tank rails (104), wherein the engine (2) is mounted downwardly of said pair of tank rails (104) on a body frame (3).

8. Motorcycle according to claim 7, **characterized in that** a lower end of the tank rail (104) is adapted to overlap, in profile, an upper end of the large reduction gear (28) at the outer side thereof.

9. Motorcycle according to claim 7 or 8, **characterized in that** upper ends of the cylindrical wall member (35) and a peripheral wall (29a) of the gear housing (29) are arranged at positions further inward than the other parts arranged below the tank rails (104), defining a wide open space between the clutch (36) and the one of the tank rails (104) arranged adjacent to the clutch (36), wherein the adjacent tank rail (104) extends in the vicinity of and upwardly of the clutch (36) in said wide open space.

10. Motorcycle according to at least one of the preceding claims 1 to 9, **characterized by** a cylindrical member (52) provided between the input shaft (37) of the transmission (22) and a bearing (51 ) on the transmission case (21) for supporting the input shaft (37) for rotation, wherein a shaft end (52b) of the cylindrical member (52) is protruded from said bearing (51) outwardly of the transmission case (21), and wherein onto the protruded portion (52b) is fitted a cylindrical body (68) provided at a shaft center of the large reduction gear (28).

11. Motorcycle according to at least one of the preceding claims 1 to 10, **characterized by** a transmission drum (84) for driving at least one shift fork (53) of the transmission (22) being separable in the lateral direction thereof into a bottomed cylindrical first drum (91) having a cam groove engageable with the shift fork (53) and a second drum (92) engaged with an opening of the first drum (91).

12. Motorcycle according to claim 11, **characterized in that** the second drum (92) is held in the transmission case (21) and **in that** to the second drum (92) is connected a shift mechanism (83).

13. Motorcycle according to claim 11 or 12, **characterized in that** said first drum (91), said shift fork (53) and a shift fork support shaft (95,96) are configured to be mounted or dismounted in the same direction as the transmission gears of the transmission (21).

14. Motorcycle according to at least one of the preceding claims 11 to 13, **characterized in that** a lower end of the one of the tank rails (104) which is arranged adjacent to the shift mechanism (83) overlaps, in profile, an upper end of the shift mechanism (83) of the transmission (21) at the outer side thereof.

15. Motorcycle, in particular according to any of the preceding claims, having an engine (2) comprising a crankshaft (13) and a transmission (22) comprising input and output shafts (37,48), said input and output shafts (37,48) and said crankshaft (13) being arranged in a cross-direction of the motorcycle, wherein said input and output shafts (37,48) are arranged vertically to each other and rearwardly and obliquely upwardly to the crankshaft (13).

16. Motorcycle according to claim 15, **characterized in that** the output shaft (48) is disposed rearwardly of and obliquely downwardly of the input shaft (37).
